## Europäisches Patentamt
## European Patent Office
## Office européen des brevets

(11) Numéro de publication: **0 184 813**
**B1**

(12)

# FASCICULE DE BREVET EUROPEEN

(45) Date de publication du fascicule du brevet: **18.01.89**

(51) Int. Cl.⁴: **B 60 L 11/02**

(21) Numéro de dépôt: **85115671.1**

(22) Date de dépôt: **10.12.85**

(54) **Dispositif électronique pour le pilotage d'un ensemble comprenant un moteur Diesel entraînant un générateur alimentant un moteur électrique.**

(30) Priorité: **11.12.84 FR 8418906**

(43) Date de publication de la demande:
**18.06.86 Bulletin 86/25**

(45) Mention de la délivrance du brevet:
**18.01.89 Bulletin 89/03**

(84) Etats contractants désignés:
**AT BE CH DE FR GB IT LI LU NL SE**

(56) Documents cités:
**EP-A-0 093 930**
**DE-A-1 438 813**
**DE-A-3 224 742**
**DE-A-3 243 855**
**FR-A-2 523 912**

(73) Titulaire: **ALSTHOM**
**38, avenue Kléber**
**F-75784 Paris Cédex 16 (FR)**
(73) Titulaire: **NEYRPIC**
**75 rue du Général Mangin**
**F-38100 Grenoble (FR)**

(72) Inventeur: **LeRouge, Bernard**
**225 rue des Landes**
**F-78400 Chatou (FR)**
Inventeur: **Jourdan, Luc**
**16, rue Ronsard**
**F-38100 Grenoble (FR)**

(74) Mandataire: **Weinmiller, Jürgen et al**
**Lennéstrasse 9 Postfach 24**
**D-8133 Feldafing (DE)**

Courier Press, Leamington Spa, England.

## Description

La présente invention est relative à un dispositif électronique pour le pilotage d'un ensemble comprenant un moteur Diesel entraînant un générateur électrique alimentant un moteur électrique. Un tel ensemble est par exemple installé sur une locomotive.

On connaît des systèmes de pilotage d'un tel ensemble; il a été décrit dans la demande de brevet français n° 82 05162 (FR—A—2 523 912) déposée le 26 Mars 1982 et ayant pour titre "Système de régulation de locomotive Diesel électrique", un système de conduite dans lequel le conducteur de locomotive commande d'abord la puissance électrique nécessaire à l'effort de traction qu'il souhaite.

A cet effet, il dispose d'un manipulateur permettant l'élaboration simultanée de valeurs de consigne relatives à la tension du générateur, au courant du moteur électrique et à l'injection du moteur Diesel.

Le système comprend un premier comparateur multiple qui reçoit les valeurs instantanées des grandeurs ci-dessus et élabore, à partir des écarts avec les valeurs de consigne, une valeur du courant d'excitation du générateur, ce qui modifie la puissance fournie par le générateur.

Mais cette action entraîne une modification de l'injection du moteur Diesel. Pour maintenir le point de fonctionnement du moteur Diesel sur la caractéristique injection-vitesse correspondant à la consommation minimale de carburant, il est nécessaire de disposer d'un second circuit élaborant, à partir de l'injection réelle mesurée, un signal de vitesse qui, comparé à la vitesse réelle mesurée du moteur Diesel, fournisse une valeur corrigée de l'injection.

Pour être stable, une régulation comme celle qui vient d'être rappelée sommairement ci-dessus, mais qui est décrite en détail dans la demande de brevet précitée, doit être lente. Il en résulte que, pendant une période non négligeable de son fonctionnement, le moteur Diesel ne fonctionne pas à son régime minimal de consommation de carburant.

Un but de la présente invention est de réaliser un dispositif de pilotage garantissant, à tout instant, le fonctionnement de l'ensemble Diesel-électrique au point de consommation minimale de carburant pour la puissance demandée.

L'invention a pour objet un dispositif électronique pour le pilotage d'un ensemble comprenant un moteur Diesel entraînant un générateur, ce dernier fournissant du courant électrique à un moteur électrique, ledit dispositif s'appliquant notamment à la conduite d'une locomotive, ledit dispositif comprenant un manipulateur manoeuvré par un conducteur de la locomotive et affichant une consigne multiple relative au courant et à la tension du générateur et à l'injection du moteur Diesel, des moyens pour comparer lesdites consignes de courant et de tension aux valeurs mesurées des grandeurs correspondantes et fournir en sortie des signaux représentatifs des écarts, caractérisé en ce que lesdits écarts et la consigne d'injection sont introduits à l'entrée d'un calculateur qui élabore une nouvelle consigne d'injection du moteur Diesel, cette consigne étant:
— d'une part adressée à un circuit ayant en mémoire les données de la courbe optimale injection-vitesse du moteur Diesel et fournissant en sortie une valeur de consigne de vitesse du moteur Diesel qui est proposée à une entrée d'un premier régulateur électronique recevant en outre un signal représentatif de la mesure de la vitesse du moteur Diesel et fournissant un signal de correction pour modifier l'injection du moteur Diesel,
— d'autre part, envoyé à une entrée d'un second régulateur électronique recevant en outre un signal représentatif de la valeur mesurée du débit d'injection et fournissant en sortie un signal de correction de la valeur du courant d'excitation du générateur.

L'invention sera bien comprise par la description donnée ci-après d'un mode préféré de réalisation de l'invention, en référence au dessin ci-annexé dans lequel:
— la figure 1 est un schéma synoptique d'un système de pilotage d'un ensemble Diesel électrique selon l'art antérieur
— la figure 2 est un schéma synoptique d'un système de pilotage d'un ensemble Diesel-électrique selon la présente invention
— les figures 3A et 3B sont un schéma détaillé par blocs d'un système de pilotage selon l'invention appliqué à la conduite d'une locomotive.

La figure 4 est un diagramme représentant la consigne courant-tension du générateur.

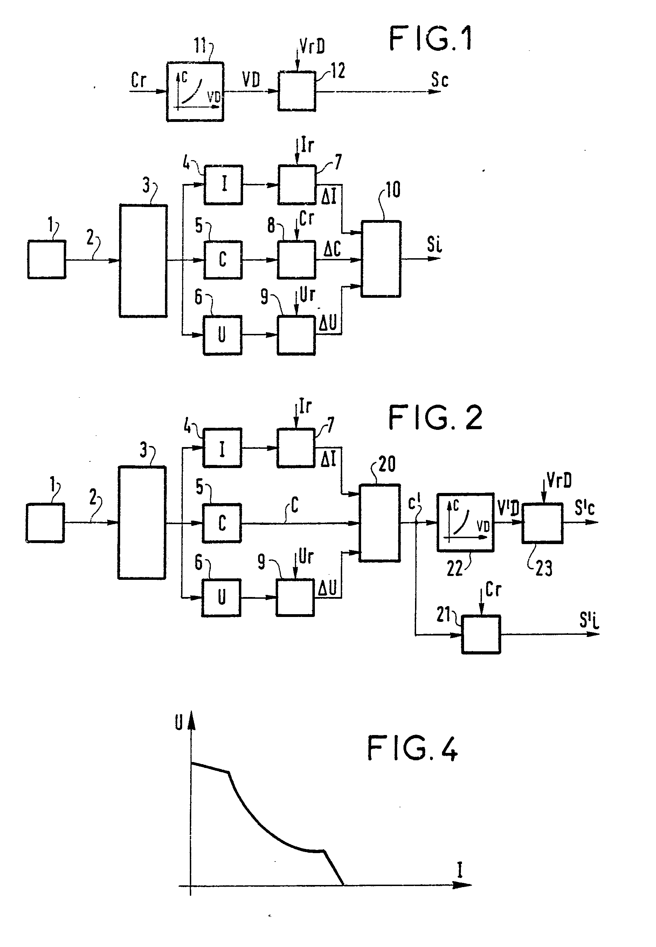

La figure 1 est un schéma simplifié du système de pilotage de l'art antérieur précité.

Un manipulateur 1 adresse des ordres 2 de progression, de régression ou d'arrêt à un organe 3 établissant une valeur de la consigne multiple, qui sert à établir plusieurs consignes particulières réalisées au moyen de mémoires 4, 5 et 6.

La mémoire 4 contient la consigne d'intensité I du générateur principal, la mémoire 5 contient la consigne C d'injection du moteur Diesel et la mémoire 6 la consigne U de tension de l'alternateur.

Ces consignes sont adressées respectivement à des comparateurs 7, 8, 9 recevant les valeurs réelles mesurées $I_r$, $C_r$ et $U_r$ des grandeurs précitées et fournissant en sortie les écarts $\triangle I$, $\triangle C$ et $\triangle U$ ($\triangle I = I_r\text{-}I$, $\triangle C = C_r\text{-}C$, $- C$, $\triangle U = U_r - U$).

Ces écarts sont adressés à un enregistreur 10 qui fournit en sortie un signal Si utilisé pour commander une diminution ou une augmentation du courant i d'excitation du générateur: augmentation si tous les écarts sont négatifs, diminution si au moins un écart est positif ou nul.

Le système de l'art antérieur est complété par une chaîne comprenant un organe 11 recevant le signal mesuré $C_r$ de l'injection du moteur Diesel et élaborant un signal $V_D$ de consigne de vitesse correspondant à la consommation minimale du moteur Diesel. Ce signal est envoyé à un comparateur 12 recevant un signal $V_{rD}$ correspondant à la vitesse mesurée du moteur diesel et fournissant en sortie un signal SC qui est utilisé pour commander une augmentation ou une diminution du débit d'injection du moteur Diesel.

La figure 2 est un schéma simplifié du système selon la présente invention, où les mêmes éléments ont reçu les mêmes numéros de référence.

Les signaux $\triangle$ I, C et $\triangle$ U sont envoyés à un calculateur 20 qui cette fois élabore une nouvelle consigne du débit d'injection C'.

Cette consigne d'injection C' est comparée dans un régulateur électronique 21 à la valeur réelle $C_r$ du débit d'injection et le signal issu du comparateur, $S'_i$ est utilisé pour modifier le courant d'excitation du générateur.

Cette même consigne modifiée C' est adressée à un circuit 22 qui calcule la vitesse $V'_D$ correspondant au point de fonctionnement optimum du moteur Diesel.

Cette valeur $V'_D$ est comparée par le régulateur électronique 23 à la vitesse réelle du moteur Diesel, et le signal de sortie $S'_c$ est utilisé pour commander le débit des pompes d'injection du moteur Diesel.

Le système qui vient d'être décrit schématiquement, et qui sera plus loin explicité en détail, assure un pilotage et un contrôle en parallèle du moteur Diesel (par le signal correcteur du débit d'injection) et de l'alternateur (par le signal correcteur du courant d'excitation du générateur).

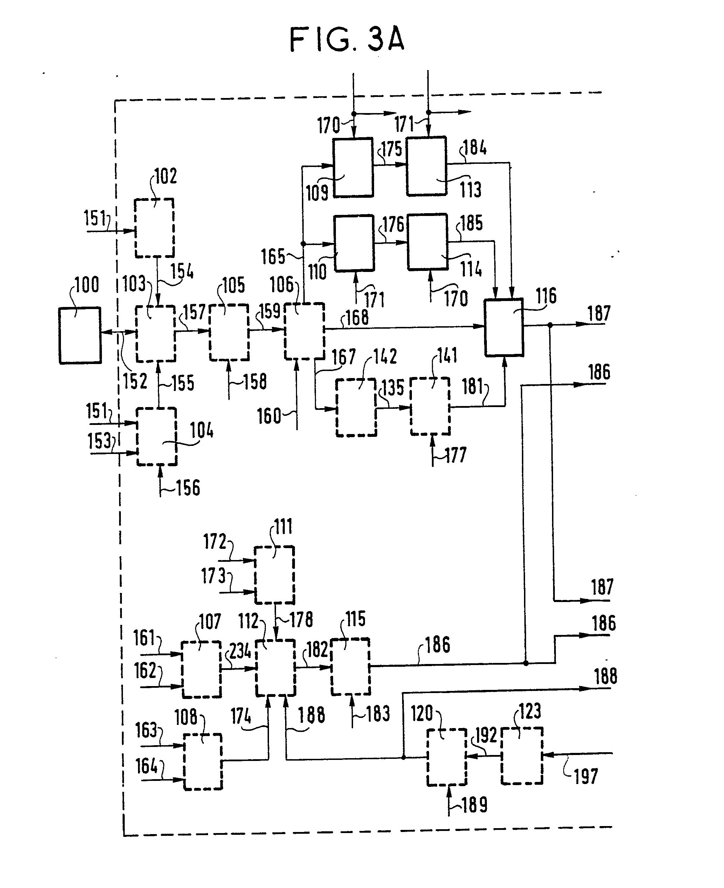

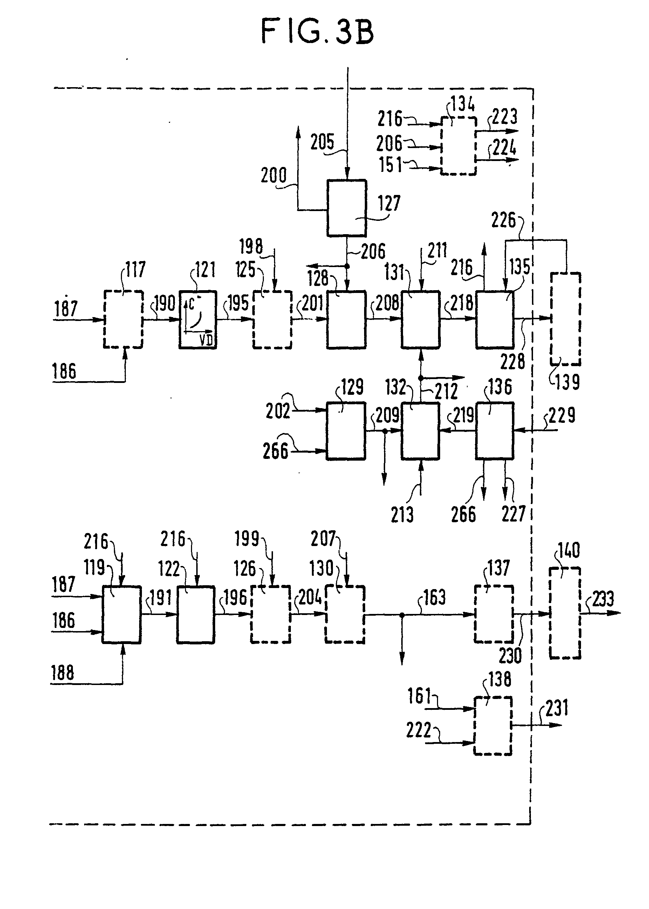

Les figures 3A et 3B sont un schéma détaillé du système de pilotage qui comprend les organes de pilotage et de régulation ci-dessus et qui est complété par la mise en oeuvre d'autres paramètres.

Le système s'applique à un ensemble Diesel-électrique pour locomotive comprenant un moteur Diesel avec ses pompes à injection de carburant, un générateur principal et un générateur auxiliaire, entraînés par le moteur Diesel. Le générateur principal fournit du courant à un moteur électrique d'entraînement de la locomotive. Le générateur auxiliaire fournit le courant d'excitation du générateur principal. D'autres organes, qui équipent habituellement une locomotive, seront rencontrés dans la description ci-après.

La référence 100 désigne le manipulateur manoeuvré par le conducteur et qui émet en sortie des ordres 152 de progression, de régression ou d'arrêt à un dispositif 103 d'élaboration d'une consigne de base 157, en tenant compte si besoin est pour l'utilisation:

— d'un signal de consigne 154 élaboré par un circuit 102 à partir du signal 151 représentant la vitesse mesurée de la locomotive

— d'un signal de consigne 155 élaboré par un circuit 104 comparant la vitesse mesurée 151 de la locomotive et sa vitesse de consigne 153. Ce circuit 104 reçoit également un signal 156 représentatif d'autres paramètres tel que la limitation de vitesse de la locomotive.

La consigne de base peut être modifiée par un circuit 105 recevant un signal 158 indicatif du mode de fonctionnement de la locomotive (traction, freinage, climatisation). Il en résulte la consigne de base modifiée 159.

Un circuit 106, recevant d'une part la consigne de base modifiée 159, et un éventuel signal 160 de réduction ou de mise à zéro (par exemple en cas de patinage, de shuntage, d'isolement d'un moteur de traction, etc...), élabore trois consignes 165, 167 et 168.

La consigne 165 est envoyée sur un organe 109 recevant un signal 170 représentatif de la tension réelle mesurée du générateur principal pour calculer une consigne de courant 175.

On souhaite que la loi tension U—courant I du générateur ait, à consigne de base donnée, l'allure représentée dans le diagramme de la figure 4, c'est-à-dire
— linéaire aux faibles courants
— linéaire aux forts courants
— hyperbolique entre les zones précitées.

La consigne 175 est comparée, dans un comparateur 113, à un signal 171 représentatif de la valeur mesurée du courant du générateur principal. Le comparateur 113 fournit un signal 184 représentatif de l'écart entre le courant réel mesuré du générateur et la consigne de courant.

La consigne 165 est également envoyée sur un organe 110 recevant le signal 171 représentatif du courant réel du générateur, et fournit une consigne de tension 176 qui respecte le diagramme de la figure 4. Ce signal 176 est appliqué à un comparateur 114 recevant le signal 170 représentatif de la tension réelle mesurée du générateur principal et fournissant un signal 185 représentatif de l'écart entre la tension réelle mesurée du générateur et la consigne de tension.

La consigne 168 est la consigne de débit d'injection du moteur Diesel.

La consigne 167 est appliquée à un organe 142 pour élaborer une consigne de courant de freinage 135 qui est appliquée à un comparateur 142 recevant la mesure 177 du courant de freinage et élaborant un signal 181 représentatif de l'écart entre le courant de freinage mesuré et la consigne de courant de freinage.

Les écarts 184, 185 et 181 et la consigne 168 sont appliqués à un organe 116 qui élabore un signal 187 qui est une consigne corrigée du débit d'injection.

On va expliquer maintenant comment cette consigne 187 est utilisée pour la régulation de la puissance électrique et pour la régulation de la vitesse et de l'injection du moteur Diesel.

Cette consigne 187 est modifiée par un circuit 117 pour tenir compte d'une consigne de correction 186 qui est explicitée plus loin.

Le circuit 117 élabore une consigne finale d'injection 190.

La consigne de correction 186 tient compte suivant l'utilisation de différents paramètres du groupe électrogène: la température d'eau de refroidissement du moteur, la valeur du courant d'excitation du générateur auxiliaire, la valeur du courant d'excitation du générateur principal, et la valeur de la pression de suralimentation.

Un comparateur 107 reçoit un signal 161 représentatif de la valeur de la température de l'eau de refroidissement du moteur Diesel et le compare à une valeur de consigne 162; il délivre un signal 234.

Un comparateur 108 reçoit un signal 163 représentatif de la valeur mesurée du courant d'excitation du générateur auxiliaire et le compare avec une valeur de consigne 164; il délivre un signal 174.

Un comparateur 111 reçoit un signal 172 représentatif de la valeur de la pression de suralimentation et le compare à une valeur de consigne 173; il délivre un signal 178.

Un comparateur 120 reçoit un signal 189 représentatif de la valeur mesurée du courant d'excitation du générateur principal et le compare à une valeur de consigne 192 élaborée par un organe 123 à partir d'ordres de commande 197; le comparateur 120 délivre un signal de sortie 188.

Les signaux 174, 178, 188 et 234, issus respectivement des comparateurs 108, 111, 120 et 107, sont envoyés aux entrées d'un calculateur 112 qui émet un signal de correction provisoire 182. Ce signal est transmis par une porte 115, le signal de correction est référencé 186, et comme indiqué ci-dessus, est envoyé à l'entrée du circuit 117.

Ce circuit élabore la consigne finale d'injection 190 à partir des signaux 187 et 186.

La consigne 190 est envoyée à l'entrée d'un circuit 121 qui, ayant en mémoire les données de la courbe injection-vitesse diesel $C(V_D)$ correspondant à la consommation minimale de carburant, élabore une consigne de vitesse du moteur Diesel 195. Cette consigne de vitesse est ajustée par un circuit 125 en fonction des ordres 198 de ralenti, d'accélération ou de sécurité. La consigne de vitesse du moteur Diesel ainsi ajustée, référencée 201 dans la figure, est envoyée à l'entrée d'un régulateur électronique 128 qui reçoit un signal 206 représentatif de la mesure de la vitesse du moteur diesel. Le comparateur 128 fournit un signal de commande 208. Le signal 206 est élaboré par un tachymètre 127 à partir de signaux 205 provenant de capteurs de vitesse ou de fréquence. Le tachymètre 127 assure aussi la surveillance et la téléindication de la mesure de la vitesse du moteur Diesel. En cas de défaut, il élabore un signal d'alarme 200. Un dispositif de validation 131 reçoit le signal 208 et le transmet, en 218, ou le retient, en fonction de signaux éventuels d'arrêts 212 ou de contrôle et de limitation 211. Les signaux d'arrêts 212 sont élaborés par un circuit de contrôle 132 qui sera décrit plus loin. Le signal 218 est amené à l'entrée d'un dispositif électronique 135 qui reçoit un signal 226 représentatif de la position des pompes à injection et fournit un signal de commande 228 à l'actionneur électro-mécanique 139 des pompes à injection.

La régulation de puissance électrique est décrite ci-après.

Un circuit 119 reçoit en entrée le signal 187 (consigne corrigée du débit d'injection), le signal 186 (consigne de correction), le signal 188 (signal de comparaison entre la valeur de consigne et la valeur mesurée du courant d'excitation du générateur principal) et le signal 216, représentatif de la valeur mesurée de l'injection dans le moteur Diesel.

Il fournit en sortie un signal d'erreurs 191 qui est introduit dans un régulateur électronique 122.

Le régulateur électronique fournit en sortie un signal 196 qui est modifié en 204 par passage dans un circuit correcteur 126 recevant un signal de correction 199 qui tient compte de la structure du groupe électrogène.

Un circuit 130, recevant le signal 204, assure sa transmission ou sa mise à zéro en fonction d'ordres 207 issus d'autres systèmes de protection de la locomotive.

Le circuit 130 délivre un signal 163 qui est amplifié en signal 230 par un amplificateur 137 pour constituer le courant d'excitation du générateur auxiliaire 140. Ce dernier fournit le courant d'excitation du générateur principal 233.

Le dispositif de l'invention comprend aussi des dispositifs d'arrêt et de sécurité qui sont indépendants des autres dispositifs du système. La mesure 266 de la vitesse réelle du moteur Diesel est effectuée par un dispositif 136 à partir de signaux de mesure 229 issus d'un capteur de vitesse propre aux sécurités, non représenté. Des bascules fournissent des informations 227 de dépassement de seuils de vitesse aux autres dispositifs de la locomotive. Si le seuil de survitesse est dépassé la bascule correspondante envoie un ordre d'arrêt 219 au système de controle 132 mentionné plus haut et à d'autres systèmes de la locomotive.

Ce système de contrôle 132 reçoit aussi des ordres 209 d'un dispositif de surveillance 129 de la pression d'huile 202 en fonction de la vitesse réelle 266 du moteur Diesel et des ordres d'arrêt 213 provenant d'autres systèmes de la locomotive.

Les ordres 209 issus du dispositif de surveillance 129 vont aussi vers d'autres dispositifs de la locomotive à titre d'information Le système de contrôle 132 envoie des ordres d'arrêt 212 au dispositif 131 et à d'autres organes de la locomotive.

A partir des mesures réelles de la vitesse locomotive 151, de la vitesse du moteur Diesel 206 et de l'injection Diesel 216, un dispositif 134 calcule les consommations instantanées 223 et cumulées 224 de carburant.

Les signaux 223 et 224 assurent la téléindication des consommations dans la locomotive.

Un dispositif de régulation 138 assure l'alimentation du coupleur électromagnétique du ventilateur. Le signal de commande 231 est calculé de façon à conserver l'égalité entre la mesure de la température d'eau 161 et la consigne de régulation de température 222.

Le dispositif dont un mode de réalisation vient d'être décrit à titre non limitatif, garantit à tout moment le fonctionnement de la locomotive en son point de consommation minimale pour la puissance demmandée.

Entièrement électronique et de technique ferroviaire, il ne nécessite aucun entretien.

Sa conception moderne lui permet de s'intégrer facilement dans les divers processus des locomotives Diesel. Aisément paramétrable et adaptable, ses nombreuses options lui donnent un caractère universel. Il est utilisable avec tous les types de transmissions électriques, avec moteurs de traction à courant continu ou alternatif triphasé.

## Revendication

Dispositif électronique pour le pilotage d'un ensemble comprenant un moteur Diesel entraînant un générateur, ce dernier fournissant du courant électrique à un moteur électrique, ledit dispositif s'appliquant notamment à la conduite d'une locomotive, ledit dispositif comprenant un manipulateur (1) manoeuvré par un conducteur de la locomotive et affichant une consigne multiple relative au courant (I) et à la tension (U) du générateur et à l'injection (C) du moteur Diesel, des moyens (7, 9) pour comparer lesdites consignes de courant (4) et de tension (6) aux valeurs mesurées des grandeurs correspondantes et fournir en sortie des signaux représentatifs des écarts, caractérisé en ce que lesdits écarts ($\triangle$ I, $\triangle$ U) et la consigne (C) d'injection sont introduits à l'entrée d'un calculateur (20) qui élabore une nouvelle consigne (C') d'injection du moteur Diesel, cette consigne étant:

— d'une part adressée à un circuit (22) ayant en mémoire les données de la courbe optimale injection-vitesse du moteur Diesel et fournissant en sortie une valeur (V'$_D$) de consigne de vitesse du moteur Diesel qui est proposée à une entrée d'un premier régulateur électronique (23) recevant en outre un signal (V$_{rD}$) représentatif de la mesure de la vitesse du moteur Diesel et fournissant un signal (S'$_c$) de correction pour modifier l'injection du moteur Diesel,

— d'autre part, envoyé à une entrée d'un second régulateur électronique (21) recevant en outre un signal (C$_r$) représentatif de la valeur mesurée du débit d'injection et fournissant en sortie un signal (S'$_I$) de correction de la valeur du courant d'excitation du générateur.

## Patentanspruch

Elektronische Vorrichtung zur Steuerung eines Aggregats mit einem Dieselmotor, der einen Generator antreibt, welcher elektrischen Strom an einen Elektromotor liefert, wobei die Vorrichtung insbesondere für eine Lokomotive verwendet wird und einen vom Lokführer betätigten Fahrschalter (1) umfaßt, der einen Vielfachsollwert betreffend den Strom (I) und die Spannung (U) des Generators und für die Einspritzung (C) des Dieselmotors einstellt, sowie Mittel (7, 9) zum Vergleich der Sollwerte des Stromes (4) und der Spannung (6) mit den gemessenen Werten der entsprechenden Größen und zur Lieferung von Signalen am Ausgang, die die Abweichungen darstellen, dadurch gekennzeichnet, daß diese Abweichungen ($\triangle$ I, $\triangle$ U) und der Einspritzsollwert (C) an den Eingang eines Rechners (20) angelegt werden, der einen neuen Einspritzsollwert (C') des Dieselmotors ermittelt, wobei dieser Sollwert einerseits an einen Kreis (22) gerichtet ist, der die Daten der optimalen Einspritz-Geschwindigkeits-Kennlinie des Dieselmotors gespeichert hält und am Ausgang einen Geschwindigkeitssollwert (V'$_D$) des Dieselmotors liefert, welcher an einen Eingang eines ersten elektronischen Reglers (23) gegeben wird, der weiter ein die Messung der Geschwindigkeit des Dieselmotors darstellendes Signal (V$_{rD}$) erhält und ein Korrektursignal (S'$_c$) zur Änderung der Einspritzung des Dieselmotors liefert, andererseits an einen Eingang eines zweiten elektronischen Reglers (21) geleitet wird, der weiter ein den gemessenen Wert der Einspritzrate darstellendes Signal (C$_r$) empfängt und am Ausgang ein Korrektursignal (S'$_I$) für den Wert des Generatorerregerstroms liefert.

## Claim

An electronic device for operating an assembly comprising a Diesel motor which drives a generator, the latter feeding an electric current to an electric motor, said device being applicable in particular to the operation of a locomotive and comprising a master controller (1) handled by an operator of the locomotive and adjusting a multiple setting relative to the current (I) and the voltage of the generator (U) and to the Diesel fuel injection (C), means (7, 9) for comparing said current (4) and voltage (6) set points with the measured values of the respective variables and supplying output signals representing the deviations, characterized in that said deviations ($\triangle$ I, $\triangle$ U) and the injection set point value (C) are applied to the input of a computer (20) which generates a new injection set point value (C') for the Diesel motor, that set point value being:

— on the one hand addressed to a circuit (22) having on store the data of the optimum injection-speed curve of the Diesel motor and feeding a speed set point value (V'$_D$) for the Diesel motor to the input of a first electronic controller (23), which also receives a signal representative of the measurement of speed (V$_{rD}$) of the Diesel motor and supplies a correcting signal (S'$_c$) adapted to modify the injection of the Diesel motor,

— and, on the other hand, transmitted to an input of a second electronic controller (21), which further receives a signal (C$_r$) representative of the measured value of the injection flow rate and delivers a correcting signal (S'$_I$) adapted to change the value of the generator excitation current.

FIG.1

FIG.2

FIG.4

1

# FIG. 3A

# FIG.3B